# EUROPÄISCHE PATENTSCHRIFT

(11) **EP 0 278 092 B1**
(45) Veröffentlichungstag und Bekanntmachung des Hinweises auf die Patenterteilung: **14.04.1993**
(21) Anmeldenummer: 87118536.9
(22) Anmeldetag: 15.12.1987
(51) Int. Cl.: E03D 9/052, G05D 9/04, G05D 7/03

(54) **Verfahren und Vorrichtung zum Steuern mindestens eines Gasstromes**
Method and device for controlling a gas stream
Méthode et dispositif pour contrôler un courant de gaz

(30) Priorität: 17.12.1986 DE 3643043
(43) Veröffentlichungstag der Anmeldung: 17.08.1988
(73) Patentinhaber: Menge, Heinrich, D-21075 Hamburg (DE)
(72) Erfinder: Menge, Heinrich, D-21075 Hamburg (DE)
(74) Vertreter: Heldt, Gert, Dr. Dipl.-Ing.

(56) Entgegenhaltungen:
- DD-B- 106 097
- DE-A- 3 526 587
- DE-A- 3 534 494
- FR-A- 874 815

## Beschreibung

Die Erfindung betrifft ein Verfahren zum Steuern mindestens eines eine Steuerkammer durchströmenden Gasstromes, dessen Durchtritt durch die Steuerkammer von einer in der Steuerkammer bis zu einem vorgegebenen Pegelstand stehenden Sperrflüssigkeit gesteuert wird.

Die Erfindung betrifft darüberhinaus eine Vorrichtung zum Steuern eines eine Steuerkammer durchströmenden Gasstromes, die mit einer Sperrflüssigkeit bis zu einem vorgegebenen Pegelstand gefüllt ist, oberhalb dessen ein den Gasstrom in die Steuerkammer einleitender Gaseinlaßkanal mit einer Gaseinlaßöffnung in die Steuerkammer mündet und in deren Bereich ein den Gasstrom in den Bereich eines mit einer Gasauslaßöffnung in die Steuerkammer mündenden Gasauslaßkanals ableitender Durchlaß angeordnet ist, wobei die Steuerkammer mindestens in eine Einlaßkammer und eine Auslaßkammer unterteilt ist und der Gasstrom zwischen Gaseinlaßkanal und Gasauslaßkanal durch die Sperrflüssigkeit unterbrochen wird. Ein solches Verfahren beziehungsweise eine solche Vorrichtung ist aus der FR-A-874815 bekannt.

Bei den weiteren bekannt gewordenen Verfahren zum Steuern mindestens eines Gasstromes mittels einer mit Sperrflüssigkeit befüllbaren Steuerkammer, zum Beispiel aus der EP-A-0 219 622, wird die Absenkung des Pegelstandes der Sperrflüssigkeit durch die Betätigung eines Bedienknopfes ausgelöst. Insbesondere bei der Durchführung der bekannten Verfahren auf dem Gebiet der Sanitärtechnik, wo mit Hilfe dieser Verfahren mit übelrichenden Anteilen belastete Luft aus dem Innenraum eines WC-Beckens abgesaugt wird, führt durch die vorbekannten Verfahren im wesentlichen vorgegebene Anordnung und Ausgestaltung der Bedienknöpfe leicht zu Fehlbedienungen. Zu einer ordnungsgemäßen Durchführung der Verfahren ist es erforderlich, daß zunächst der Pegelstand innerhalb der Steuerkammer abgesenkt wird und dabei ein Durchlaß zwischen einem in die Steuerkammer einmündenden Gaseinlaßkanal und einem gleichfalls in die Steuerkammer einmündenden Gasauslaßkanal hergestellt wird. Der Gaseinlaßkanal ist in den Bereich der mit den übelriechenden Anteilen belasteten Luft geführt, der Gasauslaßkanal mündet in ein die Abluft aufnehmendes System ein. Die Absenkung des Pegelstandes der Sperrflüssigkeit erfolgt bei dem vorbekannten Verfahren durch Öffnen oder Anheben von Ablaßvorrichtungen und weist somit eine erhbliche Ähnlichkeit zum Bedienungsablauf bei der Betätigung der Hauptspülung von Sanitärspülkästen auf.

Aufgabe der vorliegenden Erfindung ist es daher, ein Verfahren der einleitend genannten Art derart zu verbessern, daß Fehlbedienungen bei der Durchführung des Verfahrens weitgehend vermieden werden.

Diese Aufgabe wird erfindungsgemäß dadurch gelöst, daß die Sperrflüssigkeit mit mindestens einem den Pegelstand verändernden Steuerdruck beaufschlagt wird, der den Pegelstand der Sperrflüssigkeit im Bereich einer Einlaßkammer absenkt und gleichzeitig im Bereich einer mit der Einlaßkammer über einen unterhalb des Pegelstandes liegenden Durchlaß verbundenen Auslaßkammer anhebt, so daß in der Auslaßkammer eine hydrostatische Verbindung zu einem Hubrohr hergestellt wird, durch das die Sperrflüssigkeit aufgrund des hydrostatischen Druckes aus der Steuerkammer gesaugt wird und damit durch die Entleerung der Steuerkammer eine Verbindung zwischen einer Gaseinlaßöffnung und einer Gasauslaßöffnung über den Durchlaß für den Gasstrom freigegeben wird.

Die Steuerung des Verfahrensablaufes mit Hilfe von Druckluft ermöglicht die Verwendung von den Verfahrensablauf steuernden Bedienelementen, die im wesentlichen als elektrische Schalter ausgebildet sind und somit bezüglich ihrer Anordnung und Schaltung einen wesentlichen Unterschied zu üblichen mechanischen Bedienelementen aufweisen. Eine falsche Steuerung des Verfahrensablaufes durch einen Benutzer einer Vorrichtung, in der das Verfahren durchgeführt wird, kann somit weitgehend ausgeschlossen werden. Die Druckluftsteuerung ermöglicht darüberhinaus eine einfache Gestaltung einer das Verfahren durchzuführenden Vorrichtung, da sich bewegende Teile und Dichtungen im Bereich der Sperrflüssigkeit zur Durchführung des Verfahrens nicht erforderlich sind.

Gemäß einer bevorzugten Ausführungsform der Erfindung wird der den Pegelstand der Sperrflüssigkeit steuernde Steuerdruck im Bereich des Gaseinlaßkanals erzeugt. Der Steuerdruck kann somit mit ohnehin zum Transport der mit den Schadstoffen belasteten Luft vorgesehenen Vorrichtungen und somit kostengünstig erzeugt werden.

Die bislang bekanntgewordenen Vorrichtungen zur Durchführung von Verfahren zum Steuern mindestens eines Gasstromes weisen im wesentlichen mechanische Bedienelemente auf. Derartige Bedienelemente sind zum einen verschleißanfällig, zum anderen besteht die Gefahr, daß diese Bedienelemente aufgrund ihrer konstruktiven Ähnlichkeit mit anderen im Bereich der Vorrichtung vorgesehenen Bedienelementen verwechselt werden.

Weitere Aufgabe der vorliegenden Erfindung ist es daher, eine Vorrichtung der einleitend genannten Art derart zu verbessern, daß eine Bedienung der Vorrichtung mit elektrischen Elementen ermöglicht wird und verschleißanfällige Einzelteile weitgehend vermieden werden.

Diese Aufgabe wird erfindungsgemäß dadurch gelöst, daß die Auslaßkammer mit der Einlaßkammer über einen unterhalb des Pegelstandes angeordneten Durchlaß verbunden ist und die Auslaßkammer einen als Hubrohr ausgebildeten, die Sperrflüssigkeit aus der Steuerkammer ableitenden Abfluß aufweist, dessen höchster Punkt oberhalb des in der Steuerkammer vorgesehenen Pegelstandes und unterhalb eines in der Auslaßkammer durch Aufbringung von Druck in der Einlaßkammer angehobenen Pegelstandes liegt, dessen Einlaßende sich mindestens teilweise unterhalb des Durchlasses befindet und dessen Ausgangsöffnung auf einer unterhalb des Einlaßendes und unterhalb des Durchlasses angeordneten Ebene mündet.

Eine derartige Ausbildung der Steuerkammer ermöglicht die Absenkung der Sperrflüssigkeit innerhalb der Einlaßkammer durch Drucklufteinwirkung und die gleichzeitige Anhebung der Sperrflüssigkeit innerhalb der Auslaßkammer. Durch die Anhebung der Sperrflüssigkeit im Bereich der Auslaßkammer gelangt die Sperrflüssigkeit in den Bereich einer Einlaßöffnung der Verbindung zur Vorratskammer. Durch diese Verbindung ergießt sich die Sperrflüssigkeit in die Vorratskammer und gibt dabei den Durchlaß von der Einlaßkammer zur Auslaßkammer frei. Durch den Einlaßkanal in den Innenraum der Steuerkammer strömende Abluft kann nach einer Absenkung der Sperrflüssigkeit durch den Durchlaß in die Auslaßkammer und aus dieser in den Auslaßkanal einströmen. Die die Pegelabsenkung der Sperrflüssigkeit steuernde Druckluft wird von einem elektrisch angetriebenen Ventilator erzeugt, der von einem elektrischen Schalter eingeschaltet wird. Der elektrische Schalter kann deutlich unterschiedlich zu sonstigen im Bereich der Vorrichtung vorgesehenen Bedienungsknöpfen ausgebildet werden und unabhängig von der konstruktiven Ausbildung der Vorrichtung an geeigneten Plätzen positioniert werden. Eine Fehlbedienung ist damit fast völlig ausgeschlossen.

Gemäß einer bevorzugten Ausführungsform der Erfindung ist die Verbindung der Auslaßkammer zur Vorratskammer als Hubrohr ausgebildet, das sich im wesentlichen in lotrechter Richtung erstreckt und mit seinem in lotrechter Richtung unteren Ende in die Vorratskammer hineinragt sowie mit seinem in lotrechter Richtung oberen Ende im Bereich der Auslaßkammer oberhalb eines maximalen Pegelstandes der Sperrflüssigkeit angeordnet ist. Im Bereich der Auslaßkammer ist das Hubrohr von einem Außenrohr umschlossen, das im Bereich seiner in lotrechter Richtung oberen Begrenzung verschlossen ist sowie im Bereich seiner in lotrechter Richtung unteren Begrenzung eine Öffnung aufweist. Zwischen dem Hubrohr und dem Außenrohr erstreckt sich ein den Durchlaß von Sperrflüssigkeit zulassender Zwischenraum. Nach einer Anhebung des Pegelstandes der Sperrflüssigkeit in der Auslaßkammer ergießt sich Sperrflüssigkeit aus dem Bereich des Zwischenraums zwischen dem Hubrohr und dem Außenrohr in den Innenraum des Hubrohres und stellt eine hydrostatische Verbindung zwischen dem Innenraum der Auslaßkammer und der Vorratskammer her. Aufgrund der Schwerkrafteinwirkung ergießt sich die Sperrflüssigkeit aus dem Innenraum der Steuerkammer bis auf eine geringe Restmenge in den Innenraum der Vorratskammer. Die jeweils im Innenraum des Hubrohres befindlichen Flüssigkeitssäule saugt dabei die jeweilige Restmenge an Sperrflüssigkeit im Innenraum der Steuerkammer durch den sich zwischen dem Außenrohr und dem Hubrohr erstreckenden Zwischenraum ab. Eine derartige Ausbildung der Verbindung der Auslaßkammer zur der Vorratskammer vermeidet die Verwendung beweglicher oder aufwendig gegeneinander abzudichtenden Teile. Es kann somit mit preiswerten Mitteln eine äußerst zuverlässige und robuste Verbindung geschaffen werden.

Gemäß einer anderen bevorzugten Ausführungsform der Erfindung ist der Innenraum der Steuerkammer über ein Überlaufrohr mit dem Innenraum der Vorratskammer verbunden. Das Überlaufrohr ist im wesentlichen mit seiner Längsachse in lotrechter Richtung ausgerichtet und bestimmt mit seinem in lotrechter Richtung oben angeordneten Ende den maximalen Pegelstand der Sperrflüssigkeit innerhalb der Steuerkammer. Im Bereich seines in lotrechter Richtung unteren Endes weist das Überlaufrohr eine Feinjustierung auf, die es ermöglicht, seine Länge den jeweiligen Einsatzbedingungen der Vorrichtung anzupassen. Mit Hilfe des Überlaufrohres wird stets für eine gleichmäßige Befüllung der Steuerkammer in einem Ruhezustand gesorgt. Mit Hilfe der Feinjustierung ist es darüber hinaus möglich, die Funktion der Vorrichtung beeinträchtigende Auswirkungen von Fehlbedienungen zu vermeiden. Mit Hilfe der Feinjustierung wird die Länge des Überlaufrohres derartig eingestellt, daß durch eine Mindestlänge verhindert wird, daß der Steuerdruck in den Bereich der Vorratskammer entweicht und nicht seine vorgesehene Wirkung entfaltet. Die maximale Länge wird durch die Forderung vorgegeben, daß bei aus der Vorratskammer ablaufenden Wasser durch nachträgliche Einschaltung des Ventilators sich in der Steuerkammer nicht der zu ihrem Entleeren notwendige Druck aufbauen kann. Es wird so vermieden, daß in Folge einer unvollständigen Auffüllung der Steuerkammer ständig ein Durchtritt von Abluft aus dem Einlaßkanal in den Auslaßkanal sowie in umgekehrter Richtung erfolgen kann. Bei Vorrichtungen, die diese unerwünschte ständige Verbindung nicht wirksam vermeiden, müßte entweder ein die Abluft fördernder Ventilator ständig laufen, was zu einer permanenten Abfuhr von im allgemeinen aufgeheizter Luft und somit zu erheblichen Energieverlusten führen würde, oder aber es müßte damit gerechnet werden, daß nach einem Abschalten dieses Ventilators Abluft aus dem Bereich des Auslaßkanals in dem Bereich des Einlaßkanals strömt und durch diesen in den Bereich der von übelriechender Luft freizuhaltenden Umgebung der Vorrichtung gelangt.

Gemäß einer anderen bevorzugten Ausführungsform der Erfindung weist die Steuerkammer in einer in lotrechter Richtung ausgerichteten Schnittebene einen gerundeten, sich in lotrechter Richtung nach unten verjüngenden Querschnitt auf. Eine derartige Querschnittsgestaltung hat den Vorteil, daß die nach einer Entleerung der Steuerkammer im Bereich des Zwischenraumes zwischen dem Hubrohr und dem Außenrohr befindliche Sperrflüssigkeit, die nach einem Abreißen der Flüssigkeitssäule im Innenraum des Hubrohres in die Steuerkammer zurückfließt, das Außenrohr im Bereich seines in lotrechter Richtung unteren Endes umschließt und somit den Übergang von Gasen aus dem Innenraum der Steuerkammer in den Bereich der Vorratskammer vermeidet. Wird auch das Überlaufrohr im Bereich der Einlaßkammer mit einem es teilweise umschließenden Außenrohr versehen, so wird durch einen derartigen Wasserabschluß selbst für den kurzen Zeitraum der Entleerung der Vorratskammer ein Übertritt von Abluft in den Bereich der Vorratskammer vermieden. Durch die Anordnung eines Rückhaltebehälters im Bereich der Steuerkammer, dessen Inhalt sich nach einer Entleerung der Steuerkammer langsam in diese ergießt, kann der Übertritt von Abluft zusätzlich sicher vermieden werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

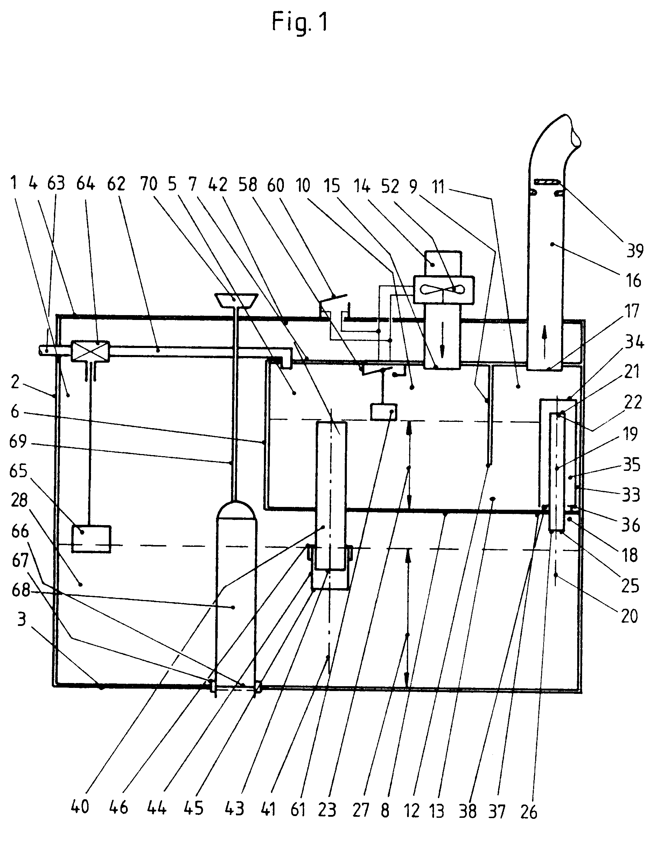

- Fig. 1:: eine Prinzipskizze einer Vorrichtung, die als Spülkasten ausgebildet ist, mit einem Hubrohr, dessen in lotrechter Richtung unteres Ende oberhalb eines maximalen Pegelstandes der Spülflüssigkeit in der Vorratskammer angeordnet ist,

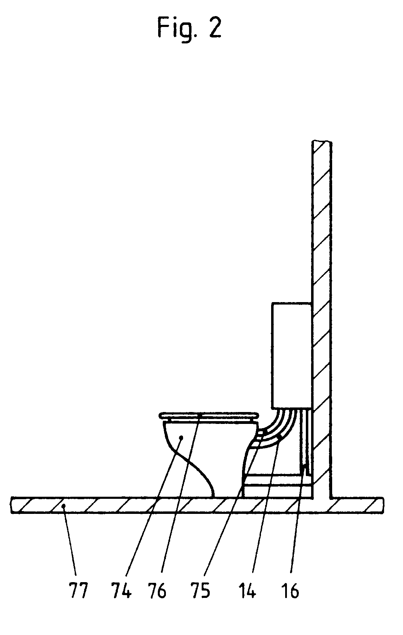

- Fig. 2:: eine Seitenansicht einer Toilettenanlage,

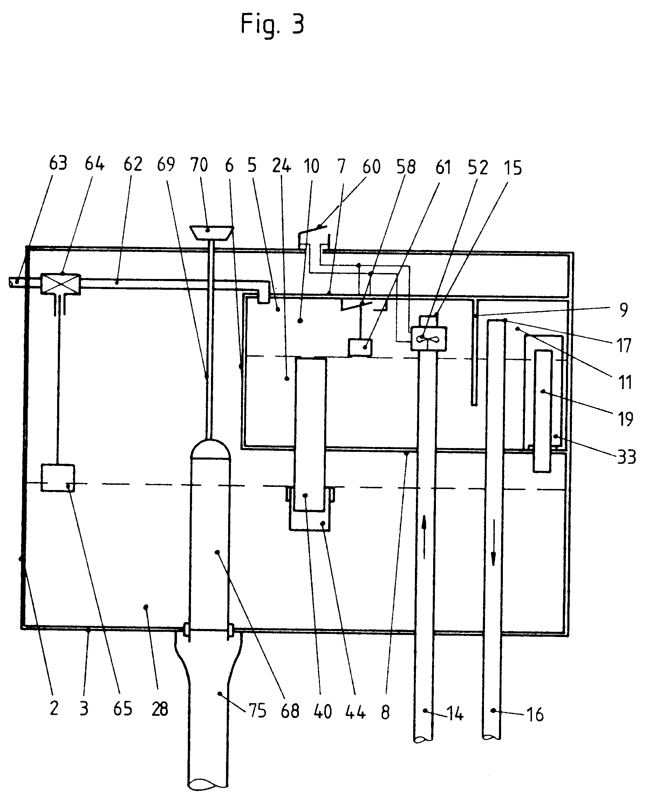

- Fig. 3:: eine Prinzipskizze einer als WC-Spülkasten ausgebildeten Vorrichtung, mit in lotrechter Richtung von unten in den Bereich der Steuerkammer geführtem Ein- und Auslaßkanal,
- Fig. 4:: einen Längsschnitt durch eine Steuerkammer mit gerundetem Querschnitt,

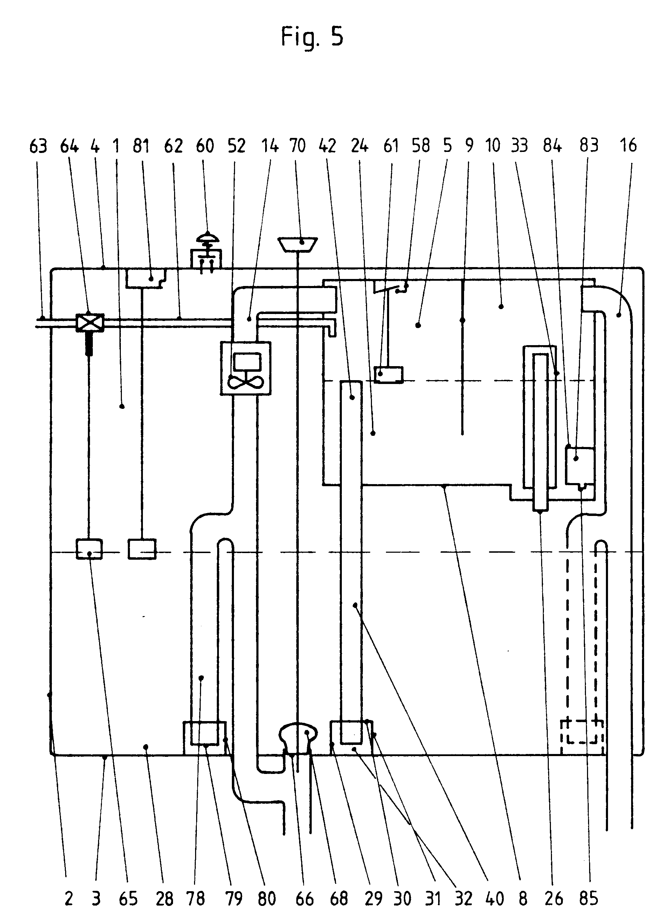

- Fig. 5:: eine prinzipielle Darstellung einer Vorrichtung, bei der im Bereich der Steuerkammer ein Rückhaltebehälter angeordnet ist und bei der ein Überwachungsschwimmerschalter vorgesehen ist,
- Fig. 6:: eine teilweise Darstellung einer Vorrichtung, die eine Steuerkammer mit etwa rechteckigem Querschnitt aufweist, deren Bodenwandung im Bereich des Hubrohres eine in lotrechter Richtung nach unten gewölbte Vertiefung aufweist,

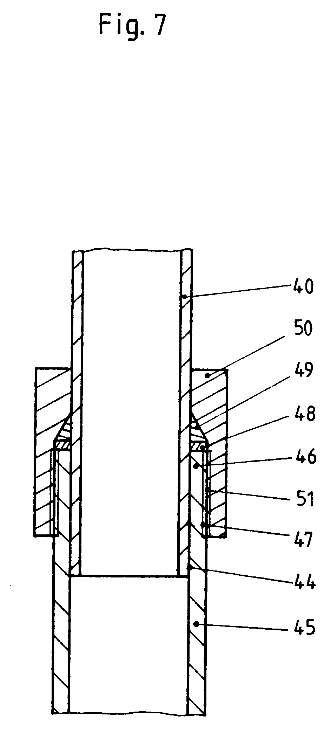

- Fig 7:: einen Längsschnitt durch ein Überlaufrohr, das im Bereich seines in lotrechter Richtung unteren Endes mit einer Feinjustierung versehen ist,

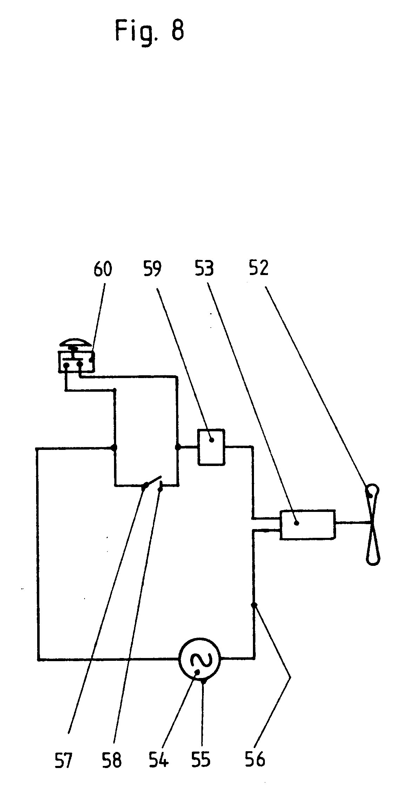

- Fig. 8:: eine Schaltskizze der elektrischen Anordnung zur Steuerung des Lüfters **und**

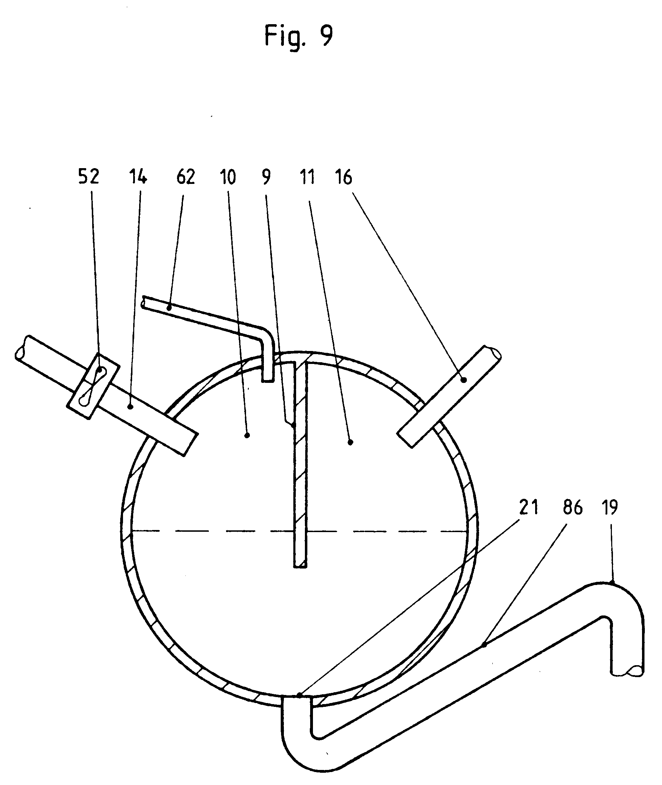

- Fig. 9: einen Querschnitt durch eine Steuerkammer mit kreisförmigen Querschnitt, bei der das Hubrohr ein gemeinsamer Teil mit dem Überlaufrohr bildet und als S-Profil ausgebildet ist.

Das erfindungsgemäße Verfahren wird zweckmäßigerweise mit einer Vorrichtung zum Steuern mindestens eines Gasstromes ausgeführt, die im wesentlichen aus einer Vorratskammer (1) besteht, die von Außenwandungen (2), einer Bodenwandung (3) und einer Dachwandung (4) umschlossen ist sowie einer Steuerkammer (5), die von Seitenwandungen (6) einem Deckel (7) und einem Boden (8) begrenzt sowie im oberen Teil der Vorratskammer (1) angeordnet ist. Die Steuerkammer (5) ist durch eine Trennwand (9), die sich im wesentlichen in lotrechter Richtung erstreckt, in eine Einlaßkammer (1o) und einer Auslaßkammer (11) unterteilt. Im Bereich eines in lotrechter Richtung unteren Endes (12) der Trennwand (9) ist ein die Einlaßkammer (1o) mit der Auslaßkammer (11) verbindender Durchlaß (13) angeordnet. In die Einlaßkammer (1o) mündet ein Einlaßkanal (14) ein, der eine Einlaßöffnung (15) aufweist, die im Bereich des Deckels (7) angeordnet ist. In die Auslaßkammer (11) mündet ein Auslaßkanal (16) ein, der eine Auslaßöffnung (17) aufweist, die gleichfalls im Bereich des Deckels (7) angeordnet ist. Im Bereich der Auslaßkammer (11) ist eine Verbindung (18) zur die Steuerkammer (5) umschließenden Vorratskammer (1) angeordnet. Die Verbindung (18) ist als Hubrohr (19) ausgebildet, das sich mit seiner Längsachse (2o) im wesentlichen in lotrechter Richtung erstreckt. Im Bereich seines in lotrechter Richtung oberen Endes (21) weist das Hubrohr (19) eine Eingangsöffnung (22) auf, die in lotrechter Richtung oberhalb eines maximalen Pegelstandes (23) von in der Steuerkammer (5) enthaltener Sperrflüssigkeit (24) angeordnet ist. Dabei weist die Eingangsöffnung (22) eine Höhe auf, bis zu der der Pegelstand (23) unter dem Einfluß eines vom Gasstrom erzeugten Druckes ansteigt. Im Bereich seines in lotrechter Richtung unteren Endes (25) weist das Hubrohr (19) eine Ausgangsöffnung (26) auf, die in lotrechter Richtung oberhalb eines maximalen Füllstandes (27) von in der Vorratskammer (1) enthaltener Spülflüssigkeit (28) angeordnet ist. Es ist aber auch möglich, das Hubrohr (19) mit seinem unteren Ende (25) bis in den Bereich der Bodenwandung (3) zu führen.

Im Bereich der Auslaßkammer (11) ist das Hubrohr (19) von einem Außenrohr (33) umschlossen, das in lotrechter Richtung oben mit einem Abschluß (34) verschlossen ist. Zwischen dem Außenrohr (33) und dem Hubrohr (19) sowie zwischen dem Abschluß (34) und dem oberen Ende (21) des Hubrohres (19) erstreckt sich ein den Durchtritt von Sperrflüssigkeit (24) zulassender Zwischenraum (35). Im Bereich seines in lotrechter Richtung unteren Endes (36) steht das Außenrohr (33) auf Füßen (37), zwischen denen sich einen Durchtritt von Sperrflüssigkeit (24) aus der Auslaßkammer (11) in den Zwischenraum (35) zulassende Abstände (38) erstrecken. Das untere Ende (36) befindet sich mindestens auf einer Höhe, auf der der Durchlaß freigegeben ist. Im Bereich des Auslaßkanals (16) ist eine Rückschlagvorrichtung (39) angeordnet, die eine Gasströmung durch den Auslaßkanal (16) in Richtung auf die Auslaßkammer (11) unterbindet. Die Auswirkung von Druckstößen aus dem Bereich des Auslaßkanals (16) wird darüber hinaus durch die Dimensionierung der Querschnitte der Einlaßkammer (1o) und der Auslaßkammer (11) begrenzt. Die Einlaßkammer (1o) weist in einer im wesentlichen horizontal verlaufenden Schnittebene eine größere Querschnittfläche als die Auslaßkammer (11) auf. Druckstöße im Bereich des Einlaßkanals (14) können somit über eine größere Fläche auf die Sperrflüssigkeit (24) einwirken als Druckstöße im Bereich des Auslaßkanals (16).

Im Bereich der Einlaßkammer (1o) ist ein Überlaufrohr (4o) angeordnet, das sich mit seiner Längsachse (41) im wesentlichen in lotrechter Richtung erstreckt. Das Überlaufrohr (4o) ist mit seinem in lotrechter Richtung oben angeordneten Ende (42) auf einem Niveau angeordnet, das einem maximalen Pegelstand (23) der Sperrflüssigkeit (24) entspricht, bei dem der Durchlaß gesperrt ist. Mit seinem in lotrechter Richtung unteren Ende (43) ragt das Überlaufrohr (4o) in die Vorratskammer (1) hinein. Im Bereich des unteren Ende (43) weist das Überlaufrohr (4o) eine seine Länge in Richtung der Längsachse (41) festlegende Feinjustierung (44) auf. Die Feinjustierung ist im wesentlichen als das Überlaufrohr (4o) umschließendes Verlängerungsrohr (45) ausgebildet, das im Bereich seines in lotrechter Richtung oberen Endes (46) mit einem Außengewinde (47) versehen ist. Im Bereich des oberen Endes (46) ist ein Dichtungsring (48) angeordnet, auf dem ein im Bereich einer äußeren Begrenzung konisch ausgebildeter Anpreßring (49) aufliegt. Es ist auch möglich, Anpreßringe (49) anderer Ausbildung vorzusehen und beispielsweise den Anpaßring (49) zylindrisch auszubilden. Der Dichtring (48), der Anpreßring (49) sowie das Außengewinde (47) sind von einer Überwurfmutter (5o) umschlossen, die mit einem Innengewinde (51) in das Außengewinde (47) eingreift. Es ist aber auch möglich, daß das Verlängerungsrohr (45) innerhalb des Überlaufrohres (4o) geführt ist und das Überlaufrohr (4o) im Bereich seines unteren Endes (43) ein Außengewinde aufweist, in das die Überwurfmutter (5o) mit ihrem Innengewinde (51) eingreift. Durch die Feinjustierung soll die Länge des gesamten Überlaufrohres so bestimmt werden, daß es bei völlig gefülltem Vorratsbehälter in den im Vorratsbehälter stehenden Spülflüssigkeit eintaucht, aber nach einer Teilentleerung des Vorratsbehälters von der Spülflüssigkeit freigegeben wird. Auf diese Weise soll erreicht werden, daß einerseits das Ende (43) tief genug in die Spülflüssigkeit eintaucht, um einen Druckaufbau in der Steuerkammer (5) bei gefülltem Vorratsbehälter zu ermöglichen und andererseits bei sich entleerendem Vorratsbehälter eine Fehlbedienung durch verspäteten Druckaufbau in der Steuerkammer (5) zu verhindern. Wird dieser erst herbeigeführt, wenn sich der Vorratsbehälter bereits entleert hat, so besteht bei einem zu langen Überlaufrohr (4o) die Gefahr, daß der Vorratsbehälter über das Hubrohr (19) gefüllt wird, die Steuerkammer (5) aber bis zur vollständigen Auffüllung des Vorratsbehälters leer bleibt.

Es ist auch möglich, das Überlaufrohr (4o) mit seinem in lotrechter Richtung nach unten angeordneten Ende in einen als Geruchsverschluß ausgebildeten Becher (29) eintauchen zu lassen, der im Bereich der Bodenwandung (3) angeordnet ist. Der Becher (29) weist eine in lotrechter Richtung oben angeordnete, das Überlaufrohr (4o) aufnehmende Öffnung (3o) auf. Zwischen einer Becherwandung (31) und dem Überlaufrohr (4o) erstreckt sich ein den Durchtritt von Sperrflüssigkeit (24) zulassender Zwischenraum (32). Der Becher (29) ist stets mit das untere Ende des Überlaufrohres (4o) geruchsdicht verschließender Flüssigkeit gefüllt. Zur Vermeidung von Fehlbedienungen ist bei einer derartigen Ausbildung des Überlaufrohres (4o) im Bereich der Vorratskammer (1) ein den Füllstand (27) überwachender Überwachungsschwimmerschalter (81) angeordnet, der mit einem im Bereich der Spülflüssigkeit (28) schwimmenden Schwimmer (82) verbunden ist.

Im Bereich der Vorratskammer (1) ist darüber hinaus ein den Füllstand (27) begrenzendes Hauptüberlaufrohr (78) angeordnet, daß mit seinem in lotrechter Richtung unteren Ende (79) in einen als Geruchsverschluß ausgebildeten Becher (8o) eintaucht, der im Bereich der Bodenwandung (3) angeordnet ist. Mit seinem in lotrechter Richtung oberen Ende mündet das Hauptüberlaufrohr (78) in den Einlaßkanal (14) ein. Es ist auch möglich, das Hauptüberlaufrohr (78) in den Auslaßkanal (16) einmünden zu lassen, wenn dieser mit einem zur Aufnahme vom Abwasser geeigneten Netz, beispielsweise dem Schmutzwasserkanal, verbunden ist.

Im Bereich des Einlaßkanals (14) ist ein Lüfter (52) mit seinen Druckstutzen angeordnet, der mit einem ihn antreibenden Motor (53) verbunden ist. Der Motor (53) wird von einer Spannungsquelle (54) gespeist, die als Wechselspannungsnetz (55) ausgebildet ist. Es ist aber auch möglich, den Motor (53) als Gleichstrommotor auszubilden, der aus einer als Gleichstrombatterie ausgebildeten Spannungsquelle (54) gespeist wird. Die Spannungsquelle (54) und der Motor (53) sind Bestandteile eines Stromkreises (56), in dem der Motor (53) und die Spannungsquelle (54) in Reihe geschaltet sind. Innerhalb des Stromkreises (56) ist ein Unterbrechungsschalter (57) angeordnet, der als Schwimmerschalter (58) ausgebildet ist. Der Stromkreis (56) weist darüber hinaus eine Steuerung (59) auf, die mit einem Einschalttaster (6o) verbunden ist. Die Steuerung (59) ist als Mehrstufensteuerung ausgebildet, die den Motor (53) während einer Einschaltphase mit einem höheren Antriebsstrom speist als während einer sich an die Einschaltphase anschließenden Betriebsphase. Es ist auch möglich, die Steuerung (59) lediglich als Umschalter auszubilden, der einen als Zweiwicklungsmotor ausgebildeten Motor (53) ansteuert.

In die Steuerkammer (5) mündet eine Speisungsleitung (62) ein, die mit einem Wassernetz (63) verbunden ist. Im Bereich der Speisungsleitung (62) ist ein Schwimmerventil (64) angeordnet, das mit einem im Bereich der Spülflüssigkeit (28) vorgesehenen Schwimmer (65) verbunden ist.

Im Bereich der Bodenwandung (3) ist eine Spülöffnung (66) angeordnet, die im Bereich ihrer der Vorratskammer (1) zugewandten Begrenzung von einer Dichtung (67) umschlossen ist.

In lotrechter Richtung oberhalb der Dichtung (67) ist ein Verschlußstopfen (68) angeordnet, der über eine Gestänge (69) mit einem Spülknopf (7o) verbunden ist.

Die Steuerkammer (5) weist in einer in lotrechter Richtung ausgerichteten Schnittebene einen etwa rechteckigen Querschnitt auf, es ist aber auch möglich, die Steuerkammer (5) gerundet auszubilden und im Bereich ihres sich in lotrechter Richtung nach unten verjüngenden Querschnittes eine Mindestfüllmenge (72) vorzusehen, die das Hubrohr (19) geruchsdicht verschließt. Es ist gleichfalls möglich, einen im wesentlichen plan verlaufenden Boden (8) der Steuerkammer (5) im Bereich des Hubrohres (19) mit einer Vertiefung (73) zu versehen, in der die Mindestfüllmenge (72) enthalten ist. Der Einlaßkanal (14) und der Auslaßkanal (16) münden in lotrechter Richtung von oben in die Steuerkammer (5), es ist aber auch möglich, die Kanäle (14,16) in lotrechter Richtung von unten oder aus seitlichen Richtung in die Steuerkammer (5) einmünden zu lassen.

Die Spülöffnung (66) mündet in eine die Vorratskammer (1) mit einem WC-Becken (74) verbindende Spülleitung (75) ein. Der Einschalttaster (6o) ist im Bereich der Dachwandung (4) angeordnet, es ist aber auch möglich, den Einschalttaster (4) im Bereich einer Toilettenbrille (76) oder im Bereich einer das WC-Becken (74) tragenden Aufstellfläche (74) anzuordnen.

Im Bereich der Steuerkammer (5) ist ein Rückhaltebehälter (83) angeordnet, der im wesentlichen als Becher ausgebildet ist und eine in lotrechter Richtung oben angeordneten Einlaßöffnung (84) und eine in lotrechter Richtung unten angeordnete Auslaßöffnung (85) aufweist. Die Auslaßöffnung (85) weist einen kleineren Querschnitt als die Einlaßöffnung (84) auf.

Es ist auch möglich das Überlaufrohr (4o) und das Hubrohr (19) als einheitliches Teil auszubilden, das mit seinem in lotrechter Richtung oberen Ende (21) im Bereich der Bodenwandung (8) angeordnet ist und sich in Richtung auf seine Ausgangsöffnung (26) in Form mindestens eines U-Profils, das auch ein S-Profil (86) sein kann, erstreckt. . Das S-Profil (86) ist mit seinem in lotrechter Richtung oberen Umkehrpunkt etwa auf einen Pegelstand angeordnet, der einer maximalen Höhe des Pegelstandes (23) entspricht.

Nach einer Betätigung des Einschalttasters (6o) schließt die Steuerung (59) den Stromkreis (56) und speist dem Motor (53) mit einem diesen antreibenden Strom. Aufgrund der Schaltcharakteristik der Steuerung (59) wird der Motor (53) während einer Einschaltphase mit einem höheren Strom beaufschlagt als während einer sich an die Einschaltphase anschließenden Betriebsphase. Der mit dem Motor (53) verbundene Lüfter (52) erzeugt dadurch während der Einschaltphase einen Steuerdruck, der durch die Einlaßöffnung (15) in die Einlaßkammer (1o) eingeleitet wird. Der Steuerdruck drückt einen Teil der in der Einlaßkammer (1o) befindlichen Sperrflüssigkeit (24) durch den Durchlaß (13) in den Bereich der Auslaßkammer (11). Der Pegel (23) der Sperrflüssigkeit (24) steigt infolgedessen in der Auslaßkammer (11) und damit auch im Bereich des Zwischenraumes (35) an. Der Pegelstand (23) steigt dabei mindestens soweit an, daß sich ein Teil der Sperrflüssigkeit (24) in das Hubrohr (19) ergießt und innerhalb des Hubrohres (19) eine Wassersäule ausbildet. Dieser Wassersäule ist über den Zwischenraum (35) mit der Sperrflüssigkeit (24) in der Steuerkammer (5) hydrostatisch verbunden und saugt die Sperrflüssigkeit (24) in den Bereich der Vorratskammer (1). Nach der Entleerung der Steuerkammer (5) ist die Einlaßöffnung (15) über den Durchlaß (13) mit der Auslaßöffnung (17) verbunden. Die vom Lüfter (52) in die Steuerkammer (5) geförderte Abluft kann somit durch den Auslaßkanal (16) entweichen.

Nach einer Betätigung des Spülknopfes (7o) ergießt sich die Spülflüssigkeit (28) aus der Vorratskammer (1) in die Spülleitung (75). Nach einem Absinken des Füllstandes (27) der Spülflüssigkeit (28) öffnet das Schwimmerventil (64) und verbindet die Speisungsleitung (62) mit dem Wassernetz (63). Durch die Speisungsleitung (62) strömt daraufhin Wasser in den Innenraum der Steuerkammer (5). Nach einem Auffüllen der Steuerkammer (5) auf einen durch die Länge des Überlaufrohres (4o) vorgegebenen maximalen Pegelstand (23) ergießt sich die weiterhin in die Steuerkammer (5) einströmende Flüssigkeit durch das Überlaufrohr (4o) in die Vorratskammer (1). Kurz bevor dieser Zustand erreicht wurde, ist der Schwimmer (61) soweit angehoben, daß der Schwimmerschalter (58) öffnet und den Stromkreis (56) unterbricht. Der Lüfter (52) wird damit ausgeschaltet.

Die weiterhin in die Steuerkammer (5) einströmende Flüssigkeit ergießt sich durch das Überlaufrohr (4o) in die Vorratskammer (1). Durch den damit verbundenen Anstieg des Füllstandes (27) der Spülflüssigkeit (28) wird der Schwimmer (65) angehoben und schaltet beim Erreichen eines vorgegebenen maximalen Füllstandes (28) die Zufuhr von Frischwasser in die Steuerkammer (5) ab.

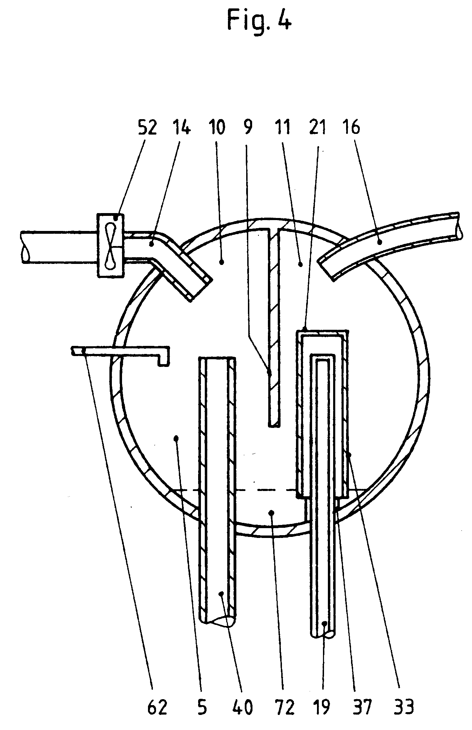

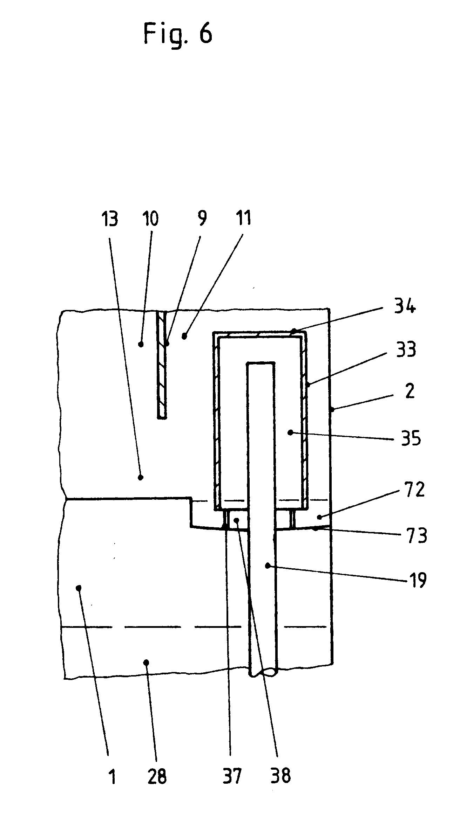

Bei einer Ausbildung der Steuerkammer gemäß den Fig. 4 oder 6 wird die nach einem Abreißen der Wassersäule im Innenraum des Hubrohres (19) aus dem Zwischenraum (35) in die Steuerkammer (5) zurück strömende Sperrflüssigkeit (24) im Bereich des in lotrechter Richtung unteren Endes (36) des Außenrohres (33) gesammelt und schließt die Steuerkammer (5) geruchsdicht gegenüber der Vorratskammer (1) ab.

Die Menge des zurückströmenden Wassers wird ergänzt durch eine zusätzliche Wassermenge, die sich nach einer Absenkung des Pegelstandes der Sperrflüssigkeit aus dem Rückhaltebehälter (83) in den Innenraum der Steuerkammer (5) ergießt. Die Auslaßöffnung (85) des Rückhaltebehälters (83) weist einen geringen Querschnitt auf, so daß gesichert ist, daß der wesentliche Anteil der im Rückhaltebehälter (83) enthaltenen Flüssigkeit sich erst nach einem Abreißen des Flüssigkeitstromes innerhalb des Hubrohres (19) in die Steuerkammer (5) ergießt.

Vor einer Inbetriebnahme der Vorrichtung wird mittels der Feinjustierung (44) die Länge des Überlaufrohres (4o) so eingestellt, daß zum einen gewährleistet ist, daß das Überlaufrohr (4o) mindestens so lang ist, um ein ungewolltes Entweichen des Steuerdrucks bei gefüllter Vorratskammer (1) durch das Überlaufrohr (4o) zu vermeiden und andererseits die Länge aber höchstens einer Bemessung entspricht, die gewährleistet, daß sich der Steuerdruck nach dem Absinken des Füllstandes (27) der Spülflüssigkeit (28) in der Vorratskammer (1) untereinen Mindestpegelstand nicht mehr in der Steuerkammer (5) entfalten kann sondern in die Vorratskammer (1) entweicht.

## Patentansprüche

1. Verfahren zum Steuern mindestens eines eine Steuerkammer (5) durchströmenden Gasstromes, dessen Durchtritt durch die Steuerkammer (5) von einer in der Steuerkammer (5) bis zu einem vorgegebenen Pegelstand (23) stehenden Sperrflüssigkeit (24) gesteuert wird, dadurch gekennzeichnet, daß die Sperrflüssigkeit (24) mit mindestens einem den Pegelstand (23) verändernden Steuerdruck beaufschlagt wird, der den Pegelstand (23) der Sperrflüssigkeit (24) im Bereich einer Einlaßkammer (10) absenkt und gleichzeitig im Bereich einer mit der Einlaßkammer (10) über einen unterhalb des Pegelstandes (23) liegenden Durchlaß (13) verbundenen Auslaßkammer (11) anhebt, so daß in der Auslaßkammer (11) eine hydrostatische Verbindung zu einem Hubrohr (19) hergestellt wird, durch das die Sperrflüssigkeit (24) aufgrund des hydrostatischen Druckes aus der Steuerkammer (5) gesaugt wird und damit durch die Entleerung der Steuerkammer (5) eine Verbindung zwischen einer Gaseinlaßöffnung (15) und einer Gasauslaßöffnung (17) über den Durchlaß (13) für den Gasstrom freigegeben wird.

2. Verfahren nach Anspruch 1, dadurch gekennzeichnet, daß die aus dem unteren Ende (25) des Hubrohres (19) austretende Sperrflüssigkeit (24) von einer Vorratskammer (1) aufgenommen wird, die in Richtung der Schwerkraft mindestens in einem Bereich ihrer Ausdehnung auf einem tieferen Niveau als die Steuerkammer (5) liegt.

3. Vorrichtung zum Steuern eines eine Steuerkammer (5) durchströmenden Gasstromes, die mit einer Sperrflüssigkeit (24) bis zu einem vorgegebenen Pegelstand (23) gefüllt ist, oberhalb dessen ein den Gasstrom in die Steuerkammer (5) einleitender Gaseinlaßkanal (14) mit einer Gaseinlaßöffnung (15) in die Steuerkammer (5) mündet und in deren Bereich ein den Gasstrom in den Bereich eines mit einer Gasauslaßöffnung (17) in die Steuerkammer (5) mündenden Gasauslaßkanales (16) ableitender Durchlaß (13) angeordnet ist, wobei die Steuerkammer (5) mindestens in eine Einlaßkammer (10) und eine Auslaßkammer (11) unterteilt ist und der Gasstrom zwischen Gaseinlaßkanal (14) und Gasauslaßkanal (16) durch die Sperrflüssigkeit (24) unterbrochen wird, dadurch gekennzeichnet, daß die Auslaßkammer (11) mit der Einlaßkammer (10) über einen unterhalb des Pegelstandes (23) angeordneten Durchlaß (13) verbunden ist und die Auslaßkammer (11) einen als Hubrohr (19) ausgebildeten, die Sperrflüssigkeit (24) aus der Steuerkammer (5) ableitenden Abfluß aufweist, dessen höchster Punkt (22) oberhalb des in der Steuerkammer (5) vorgesehenen Pegelstandes (23) und unterhalb eines in der Auslaßkammer (11) durch Aufbringung von Druck in der Einlaßkammer (10) angehobenen Pegelstandes liegt, dessen Einlaßende (36) sich mindestens teilweise unterhalb des Durchlasses (13) befindet und dessen Ausgangsöffnung (26) auf einer unterhalb des Einlaßendes (36) und unterhalb des Durchlasses (13) angeordneten Ebene mündet.

4. Vorrichtung nach Anspruch 3, dadurch gekennzeichnet, daß der Druck zur Anhebung des Pegelstandes in der Auslaßkammer (11) über den Gaseinlaßkanal (14) aufbringbar ist.

5. Vorrichtung nach Anspruch 3 oder 4, dadurch gekennzeichnet, daß die Steuerkammer (5) innerhalb einer Vorratskammer (1) angeordnet ist, mit der sie über den Abfluß (19) verbunden ist, dessen seinem Einlaßende (36) abgewandte Ausgangsöffnung (26) in die Vorratskammer (1) mündet.

6. Vorrichtung nach einem der Ansprüche 3 bis 5, dadurch gekennzeichnet, daß das Hubrohr (19) sich mit seiner Längsachse (20) im wesentlichen in lotrechter Richtung erstreckt und im Bereich der Auslaßkammer (11) mindestens teilweise von einem Außenrohr (33) umschlossen ist, das im Bereich seines in lotrechter Richtung oberen Endes von einem Abschluß (34) verschlossen ist und daß zwischen dem Hubrohr (19) einerseits und dem Außenrohr (33) andererseits ein zum Transport der Sperrflüssigkeit (24) ausreichend bemessener Zwischenraum (35) vorgesehen ist.

7. Vorrichtung nach einem der Ansprüche 3 bis 6, dadurch gekennzeichnet, daß ein Abluft fördernder Lüfter (52) mit seinem Druckstutzen im Gaseinlaßkanal (14) angeordnet ist.

8. Vorrichtung nach einem der Ansprüche 3 bis 7, dadurch gekennzeichnet, daß ein Schwimmerschalter (58) mit einem ihn steuernden und im Bereich der Steuerkammer (5) angeordneten Schwimmer (61) verbunden ist.

9. Vorrichtung nach Anspruch 7 oder 8, dadurch gekennzeichnet, daß ein Einschalttaster (60) mit einer Steuerung (59) verbunden ist, die als einen Motor (53) des Lüfters (52) mit unterschiedlichen Stromstärken speisende Mehrstufensteuerung ausgebildet ist.

10. Vorrichtung nach einem der Ansprüche 3 bis 9, dadurch gekennzeichnet, daß im Bereich der Steuerkammer (5) ein den maximalen Pegelstand (23) der Sperrflüssigkeit (24) begrenzendes Überlaufrohr (40) angeordnet ist, das sich mit seiner Längsachse (41) im wesentlichen in lotrechter Richtung erstreckt und in den Vorratsbehälter mündet.

11. Vorrichtung nach einem der Ansprüche 3 bis 10, dadurch gekennzeichnet, daß die Steuerkammer (5) über eine Speisungsleitung (62) mit einem Wassernetz (63) verbunden ist.

12. Vorrichtung nach einem der Ansprüche 3 bis 11, dadurch gekennzeichnet, daß der Boden (8) der Steuerkammer (5) im Bereich des Hubrohres (19) eine Vertiefung (73) aufweist, die mit einer einen Gasdurchtritt vom Außenrohr in das Hubrohr (19) verhindernden Mindestfüllmenge (72) an Sperrflüssigkeit (24) gefüllt ist.

13. Vorrichtung nach einem der Ansprüche 10 bis 12, dadurch gekennzeichnet, daß das Überlaufrohr (40) im Bereich der Steuerkammer (5) mindestens teilweise von einem Außenrohr umschlossen ist und einen Abstand aufweist, der zwischen seiner dem Überlaufrohr (40) zugewandten inneren Begrenzung und dem Überlaufrohr (40) angeordnet ist.

14. Vorrichtung nach einem der Ansprüche 3 bis 13, dadurch gekennzeichnet, daß die Vorratskammer (1) als Innenraum eines WC-Spülkastens ausgebildet ist.

15. Vorrichtung nach einem der Ansprüche 3 bis 14, dadurch gekennzeichnet, daß im Bereich der Vorratskammer (1) ein den Füllstand (27) begrenzendes Hauptüberlaufrohr (78) angeordnet ist.

16. Vorrichtung nach Anspruch 15, dadurch gekennzeichnet, daß das Hauptüberlaufrohr (78) mit einem in lotrechter Richtung unten angeordneten Ende (79) in einen als Geruchsverschluß ausgebildeten Becher (80) eintaucht.

17. Vorrichtung nach Anspruch 15 oder 16, dadurch gekennzeichnet, daß das Hauptüberlaufrohr (78) mit einem dem Ende (79) abgewandt angeordneten Ende in den Gaseinlaßkanal (14) einmündet.

18. Vorrichtung nach Anspruch 15 oder 16, dadurch gekennzeichnet, daß das Hauptüberlaufrohr (78) mit einem dem Ende (79) abgewandt angeordneten Ende in den Gasauslaßkanal (16) einmündet.

19. Vorrichtung nach einem der Ansprüche 15 bis 18, dadurch gekennzeichnet, daß im Bereich der Vorratskammer (1) ein den Füllstand (27) überwachender Überwachungsschwimmerschalter (81) angeordnet ist, der mit dem den Motor (53) des Lüfters (52) speisenden Stromkreis (56) verbunden ist.

20. Vorrichtung nach einem der Ansprüche 3 bis 19, dadurch gekennzeichnet, daß im Bereich der Steuerkammer (5) ein diese nach ihrer Entleerung mit einer Restmenge an Sperrflüssigkeit (24) befüllender Rückhaltebehälter (83) angeordnet ist, der eine in lotrechter Richtung oben angeordnete Einlaßöffnung (83) großen Querschnitts und eine in lotrechter Richtung unten angeordnete Auslaßöffnung (85) kleinen Querschnitts aufweist.

21. Vorrichtung nach einem der Ansprüche 3 bis 20, dadurch gekennzeichnet, daß der Gaseinlaßkanal (14) in eine die Vorratskammer (1) mit einem WC-Becken (7) verbindende Spülleitung (75) einmündet.

## Claims

1. A method of controlling at least one gas flow which flows through a control chamber (5) and whose passage through the control chamber (5) is controlled by a barrier liquid (24) which is disposed in the control chamber (5) up to a predetermined level (23), characterised in that the barrier liquid (24) is acted upon by at least one control pressure which varies the level (23) and which lowers the level (23) of the barrier liquid (24) in the region of an inlet chamber (10) and at the same time raises it in the region of an outlet chamber (11) connected to the inlet chamber (10) by way of a passage (13) below the level (23) so that in the outlet chamber (11) a hydrostatic communication is made with a lift pipe (19) through which the barrier liquid (24) is sucked out of the control chamber (5) due to the hydrostatic pressure and thus by virtue of the emptying of the control chamber (5) a communication is opened for the gas flow between a gas inlet opening (15) and a gas outlet opening (17) by way of the passage (13).

2. A method according to claim 1 characterised in that the barrier liquid (24) which issue from the lower end of the lift pipe (19) is received by a storage chamber (1) which in the direction of the force of gravity is disposed a least in a region of its extent at a lower level than the control chamber (5).

3. Apparatus for controlling a gas flow passing through a control chamber (5) which is filled with a barrier liquid (24) to a predetermined level (23) above which a gas inlet duct (14) for passing the gas flow into the control chamber (5) opens with a gas inlet opening (15) into the control chamber (5) and in the region of which is disposed a passage (13) for carrying the gas flow away into the region of a gas outlet duct (16) which opens into the control chamber (5) with a gas outlet opening (17), wherein the control chamber (5) is divided at least into an inlet chamber (10) and an outlet chamber (11) and the gas flow between the gas inlet duct (14) and the gas outlet duct (16) is interrupted by the barrier liquid (24), characterised in that the outlet chamber (11) is communicated with the inlet chamber (10) by way of a passage (13) arranged beneath the level (23) and the outlet chamber (11) has a discharge which is in the form of a lift pipe (19) and which carries the barrier liquid (24) out of the control chamber (5) and whose highest point (22) is above the level (23) provided in the control chamber (5) and below a level which is raised in the outlet chamber (11) by applying pressure in the inlet chamber (10) and whose inlet end (36) is disposed at least partially beneath the passage (13) and whose outflow opening (26) opens at a plane beneath the inlet end (36) and beneath the passage (13).

4. Apparatus according to claim 3 characterised in that the pressure for raising the level in the outlet chamber (11) can be applied by way of the gas inlet duct (14).

5. Apparatus according to claim 3 or claim 4 characterised in that the control chamber (5) is disposed within a storage chamber (1) to which it is connected by way of the discharge (19) whose outflow opening (26), which is remote from its inlet end (36), opens into the Storage chamber (1).

6. Apparatus according to one of claims 3 to 5 characterised in that the lift pipe (19) extends with its longitudinal axis (20) substantially perpendicularly and in the region of the outlet chamber (11) is at least partially enclosed by an outer pipe (33) which in the region of its end which is the upper end in the perpendicular direction is closed by a closure (34) and that provided between the lift pipe (19) on the one hand and the outer pipe (33) on the other hand is an intermediate space (35) which is of sufficient size for transportation of the barrier liquid (24).

7. Apparatus according to one of claims 3 to 6 characterised in that a fan (52) for conveying exhaust air is arranged with its pressure connection in the gas inlet duct (14).

8. Apparatus according to one of claims 3 to 7 characterised in that a float switch (58) is connected to a float (61) which is arranged in the region of the control chamber (5), for controlling the float switch.

9. Apparatus according to claim 7 or claim 8 characterised in that a switch-on button (60) is connected to a control means (59) which is in the form of a multi-stage control means supplying a motor (53) of the fan (52) with different current strengths.

10. Apparatus according to one of claims 3 to 9 characterised in that disposed in the region of the control chamber (5) is an overflow pipe (40) which limits the maximum level (23) of the barrier liquid (24) and which extends with its longitudinal axis (41) substantially in a perpendicular direction and which opens into the storage container.

11. Apparatus according to one of claims 3 to 10 characterised in that the control chamber (5) is connected to a water mains system (63) by way of a feed conduit (62).

12. Apparatus according to one of claims 3 to 11 characterised in that the bottom (8) of the control chamber (5) has in the region of the lift pipe (19) a depression (73) which is filled with a minimum filling amount (72) of barrier liquid (24), to prevent gas from passing from the outer pipe into the lift pipe (19).

13. Apparatus according to one of claims 10 to 12 characterised in that the overflow pipe (40), in the region of the control chamber (5), is at least partially enclosed by an outer pipe and has a spacing which is arranged between its inner surface which is towards the overflow pipe (40), and the overflow pipe (40).

14. Apparatus according to one of claims 3 to 13 characterised in that the storage chamber (1) is in the form of the interior of a WC-flush tank.

15. Apparatus according to one of claims 3 to 14 characterised in that a main overflow pipe (78) for limiting the filling level (27) is arranged in the region of the storage chamber (1).

16. Apparatus according to claim 15 characterised in that the main overflow pipe (78) dips with an end (79) which is arranged downwardly in the perpendicular direction, into a bowl (80) which is in the form of an odour trap.

17. Apparatus according to claim 15 or claim 16 characterised in that the main overflow pipe (78) opens with an end which is remote from the end (79) into the gas inlet duct (14).

18. Apparatus according to claim 15 or claim 16 characterised in that the main overflow pipe (78) opens with an end which is remote from the end (79) into the gas outlet duct (16).

19. Apparatus according to one of claims 15 to 18 characterised in that arranged in the region of the storage chamber (20) is a monitoring float switch (81) which monitors the filling level (27) and which is connected to the circuit (56) feeding the motor (53) of the fan (52).

20. Apparatus according to one of claims 3 to19 characterised in that disposed in the region of the control chamber (5) is a retention container (83) which after emptying of the control chamber fills it with a residual amount of barrier liquid (24) and which has an inlet opening (84) of large cross-section which is arranged at the top in the perpendicular direction and an outlet opening (85) of small cross-section which is arranged at the bottom in the perpendicular direction.

21. Apparatus according to one of claims 3 to 20 characterised in that the gas inlet duct (14) opens into a flushing conduit (75) connecting the storage chamber (1) to a WC-bowl (7).

## Revendications

1. Procédé pour le guidage d'au moins un courant de gaz traversant une chambre de guidage (5), dont le passage à travers la chambre de guidage (5) est orienté par un liquide obturant (24) situé dans la chambre de guidage (5) jusqu'à un niveau (23) prédéterminé, caractérisé en ce que le liquide obturant (24) est sollicité sous au moins une pression de guidage modifiant le niveau (23), qui abaisse le niveau (23) du liquide obturant (24) dans le secteur d'une chambre d'admission (10) et le relève en même temps dans le secteur d'une chambre d'évacuation (11) reliée à la chambre de guidage (5) par un passage (13) situé en-dessous du niveau (23), de telle sorte qu'une communication hydrostatique s'établisse dans la chambre d'évacuation (11) vers un tube de poussée (19), à travers lequel le liquide obturant (24) est aspiré du fait de la pression hydrostatique hors de la chambre de guidage (5) et la vidange de la chambre de guidage (5) libère ainsi une communication entre une ouverture d'admission du gaz (15) et une ouverture d'évacuation du gaz (17) pour le courant de gaz par l'intermédiaire du passage (13).

2. Procédé selon la revendication 1, caractérisé en ce que le liquide obturant (24) sortant de l'extrémité inférieure (25) du tube de poussée (19) est prélevé dans une chambre de réserve (1), qui se trouve au moins dans un secteur de son étendue à un niveau plus bas que la chambre de guidage (5) dans le sens de la gravité.

3. Mécanisme pour le guidage d'un courant de gaz traversant une chambre de guidage (5), qui est remplie d'un liquide obturant (24) jusqu'à un niveau (23) prédéterminé, au-dessus duquel un canal d'admission du gaz (14) introduisant le courant de gaz dans la chambre de guidage (5) débouche par une ouverture d'admission du gaz (15) dans la chambre de guidage (5) et dans le secteur de laquelle est disposé un passage (13) évacuant dans le secteur d'un canal d'évacuation du gaz (16) débouchant dans la chambre de guidage (5) par une ouverture d'évacuation du gaz (17), la chambre de guidage (5) étant divisée au moins en une chambre d'admission (10) et une chambre d'évacuation (11) et le courant de gaz étant interrompu entre le canal d'admission du gaz (14) et le canal d'évacuation du gaz (16) par le liquide obturant (24), caractérisé en ce que la chambre d'évacuation (11) communique avec la chambre d'admission (10) par un passage (13) disposé en-dessous du niveau (23) et la chambre d'évacuation (11) présente un écoulement évacuant le liquide obturant (24) de la chambre de guidage (5) conçu comme un tube de poussée (19), dont le point le plus haut (22) se trouve au-dessus du niveau (23) prévu dans la chambre de guidage (5) et en-dessous d'un niveau relevé dans la chambre d'évacuation (11) par l'application de pression dans la chambre d'admission (10), dont l'extrémité d'admission (36) se trouve au moins partiellement en-dessous du passage (13) et dont l'ouverture de sortie (26) débouche dans un plan disposé en-dessous de l'extrémité d'admission (36) et en-dessous du passage (13).

4. Mécanisme selon la revendication 3, caractérisé en ce que la pression destinée à relever le niveau dans la chambre d'évacuation (11) peut être acheminée par le canal d'admission du gaz (14).

5. Mécanisme selon la revendication 3 ou 4, caractérisé en ce que la chambre de guidage (5) est disposée à l'intérieur d'une chambre de réserve (1), avec laquelle elle communique par l'écoulement (19), dont l'ouverture de sortie (26) opposée à son extrémité d'admission (36) débouche dans la chambre de réserve (1).

6. Mécanisme selon l'une quelconque des revendications 3 à 5, caractérisé en ce que le tube de poussée (19) s'étend avec son axe longitudinal (20) sensiblement vertical et est entouré dans le secteur de la chambre d'évacuation (11) au moins partiellement par un tube extérieur (33), qui est fermé dans le secteur de son extrémité supérieure dans le sens vertical par une fermeture (34) et en ce qu'entre le tube de poussée (19) d'une part et le tube extérieur (33) d'autre part il est prévu un espace intermédiaire (35) de dimensions suffisantes pour le transport du liquide obturant (24).

7. Mécanisme selon l'une quelconque des revendications 3 à 6, caractérisé en ce qu'un ventilateur (52) déplaçant de l'air d'évacuation est disposé de telle sorte que son tuyau de refoulement se trouve dans le canal d'admission du gaz (14).

8. Mécanisme selon l'une quelconque des revendications 3 à 7, caractérisé en ce qu'un interrupteur à flotteur (58) est relié avec un flotteur (61) qui le commande et qui est disposé dans le secteur de la chambre de guidage (5).

9. Mécanisme selon la revendication 7 ou 8, caractérisé en ce qu'une touche de mise en circuit (60) est reliée avec une commande (59), qui est conçue comme un moteur (53) du ventilateur (52) avec une commande à plusieurs paliers fournissant des intensités de courant différentes.

10. Mécanisme selon l'une quelconque des revendications 3 à 9, caractérisé en ce qu'un tube de trop-plein (40) limitant le niveau (23) maximal du liquide obturant (24) est disposé dans le secteur de la chambre de guidage (5), lequel s'étend avec son axe longitudinal (41) sensiblement dans le sens vertical et débouche dans le réservoir de réserve.

11. Mécanisme selon l'une quelconque des revendications 3 à 10, caractérisé en ce que la chambre de guidage (5) communique par une conduite d'alimentation (62) avec le réseau d'adduction d'eau (63).

12. Mécanisme selon l'une quelconque des revendications 3 à 11, caractérisé en ce que le fond (8) de la chambre de guidage (5) présente dans le secteur du tube de poussée (19) une dépression (73), qui est remplie d'une quantité minimale (72) de liquide obturant (24) empêchant un passage de gaz du tube extérieur au tube de poussée (19).

13. Mécanisme selon l'une quelconque des revendications 10 à 12, caractérisé en ce que le tube de trop-plein (40) est entouré au moins partiellement d'un tube extérieur dans le secteur de la chambre de guidage (5) et présente un écart qui est disposé entre sa limite intérieure orientée vers le tube de trop-plein (40) et le tube de trop-plein (40).

14. Mécanisme selon l'une quelconque des revendications 3 à 13, caractérisé en ce que la chambre de réserve (1) est conçue comme l'espace intérieur d'un réservoir de chasse d'eau de W.C.

15. Mécanisme selon l'une quelconque des revendications 3 à 14, caractérisé en ce qu'un tube de trop-plein principal (78) délimitant le niveau de remplissage (27) est disposé dans le secteur de la chambre de réserve (1).

16. Mécanisme selon la revendication 15, caractérisé en ce que le tube de trop-plein principal (78) plonge par une extrémité (79) disposée vers le bas dans le sens vertical dans une coupe (80) conçue comme un siphon inodore.

17. Mécanisme selon la revendication 15 ou 16, caractérisé en ce que le tube de trop-plein principal (78) débouche par une extrémité opposée à l'extrémité (79) dans le canal d'admission du gaz (14).

18. Mécanisme selon la revendication 15 ou 16, caractérisé en ce que le tube de trop-plein principal (78) débouche par son extrémité opposée à l'extrémité (79) dans le canal d'évacuation du gaz (16).

19. Mécanisme selon l'une quelconque des revendications 15 à 18, caractérisé en ce qu'un interrupteur à flotteur de surveillance (81) surveillant le niveau de remplissage (27) est disposé dans le secteur de la chambre de réserve (1), lequel communique avec le circuit électrique (56) alimentant le moteur (53) du ventilateur (52).

20. Mécanisme selon l'une quelconque des revendications 3 à 19, caractérisé en ce qu'un réservoir de rétention (83) est disposé dans le secteur de la chambre de guidage (5), lequel la remplit après sa vidange avec une quantité restante de liquide obturant (24) et présente une ouverture d'admission de grande section disposée en haut dans le sens vertical et une ouverture d'évacuation (85) de petite section située en bas dans le sens vertical.

21. Mécanisme selon l'une quelconque des revendications 3 à 20, caractérisé en ce que le canal d'admission du gaz (14) débouche dans une conduite de chasse d'eau (75) reliant la chambre de réserve (1) avec une cuvette de W.C. (7).
